Europäisches Patentamt

European Patent Office

Office européen des brevets

(19)

(11) **EP 1 130 827 A2**

(12) **EUROPEAN PATENT APPLICATION**

(43) Date of publication:
**05.09.2001 Bulletin 2001/36**

(51) Int Cl.$^7$: **H04B 10/18**

(21) Application number: **01100905.7**

(22) Date of filing: **16.01.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **19.01.2000 JP 2000011027**

(71) Applicant: **MITSUBISHI DENKI KABUSHIKI KAISHA**
**Tokyo 100-8310 (JP)**

(72) Inventors:
• **Sugihara, Takashi, Mitsubishi Denki K.K.**
**Tokoyo 100-8310 (JP)**
• **Kinjo Kaoru, Mitsubishi Denki K.K.**
**Tokoyo 100-8310 (JP)**
• **Shimizu, Katsuhiro, Mitsubishi Denki K.K.**
**Tokoyo 100-8310 (JP)**

(74) Representative: **Pfenning, Meinig & Partner**
**Mozartstrasse 17**
**80336 München (DE)**

(54) **WDM system with polarisation mode dispersion control**

(57) The wavelength multiplexing optical transmission system is provided with a wave divider (11) that divides received wavelength-multiplexed light signal for each predetermined channel block. Further, PMD compensation circuits (13) compensate the PMD of each light signal. A wavelength variable filter (17) selectively outputs only light signal having a desired wavelength. Polarization analyzing sections (19) analyze polarization using Jones Matrix method. Finally, compensation control sections (16) control the PMD compensation by each PMD compensating circuit (13) based on the result of analysis in each polarization analyzing section (19).

FIG.1

EP 1 130 827 A2

## Description

### FIELD OF THE INVENTION

The present invention relates to a wavelength multiplexing optical transmission system having a function for compensating polarization mode dispersion characteristic which deteriorates the quality of optical signal when the wavelength multiplexed optical signal is transmitted optically over a ultra long distance at an ultra high speed.

### BACKGROUND OF THE INVENTION

When light propagates through substances each having a different refractivity, propagation velocity of light in the substance differs depending on the magnitude of this refractivity. If the polarization direction of incident light is different, propagation of light in material (anisotropic material) having a different refractivity causes a phenomenon that delay time after the light passes the material differs depending on the condition of polarization in the material. Here, a difference in the delay time generated in a light polarized in the direction of a polarized wave particular to that material is called polarization mode dispersion (hereinafter referred to as PMD).

Generally, a single mode fiber for use in optical transmission path generates a slight anisotropy locally along the length direction thereof. Therefore, when light is propagated through a fiber having such an anisotropy, light signal generates a difference in delay depending on the polarization direction of light signal at a position where this anisotropy occurs. If the difference of delay due to this difference of polarization is accumulated in the light transmission path, deterioration of signal waveform at a receiving end is induced.

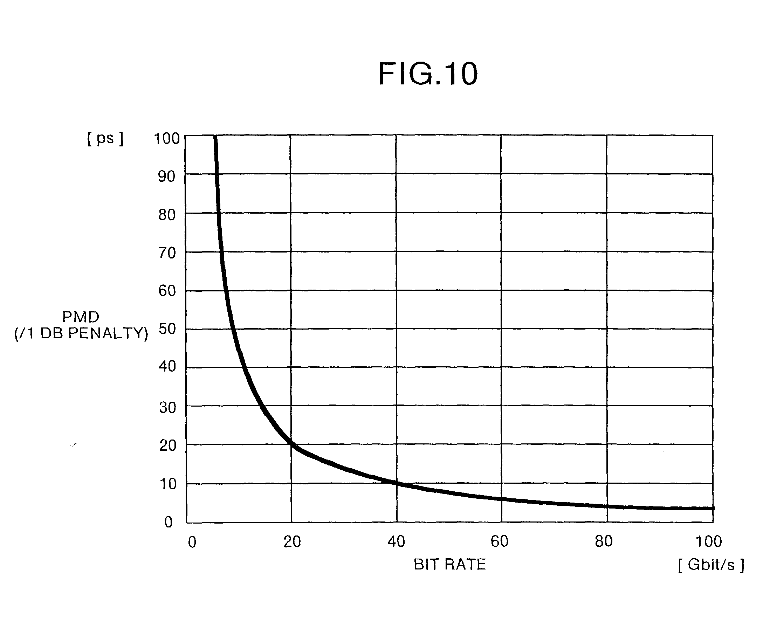

Fig. 10 shows a relation between PMD in light transmission path inducing 1 dB penalty in transmission of NRZ (non-return to zero) signal whose pulse width is equal to pulse interval and light transmission velocity (bit rate) . The relation indicated in Fig. 10 is produced based on a relation expression described in "Fading in Lightwave Systems Due to Polarization-Mode Dispersion" (C. D. Poole, R. W. Tkach, A. R. Chraplyvy, and D. A. Fishman, IEEE Photonics Technology Letters, vol. 3, No.1, January 1991, pp.68-70).

That is, the document indicates a relation between a magnitude $\Delta\tau$ of the PMD when the power penalty deteriorates by 1 dB and a pulse width T (= 1/B: "B" is a bit rate) of NRZ signal through a following expression (1).

$$\Delta\tau/T \fallingdotseq 0.4 \qquad (1)$$

If a relation between the magnitude $\Delta\tau$ of the PMD when the power penalty deteriorates by 1 dB and the bit rate B of the NRZ signal is obtained according to this expression (1), a result shown in Fig. 10 is provided. As a result, if NRZ signal of 40 Gbit/s is optically transmitted, it is found that the PMD possessed by the light transmission path must be less than 10 ps.

On the other hand, a real light transmission path has a PMD of about 0.1 ps/$\sqrt{}$(km) at average even if a low-PMD fiber is employed. This indicates that a PMD of about 10 ps is generated after transmission at a distance of 10000 km. Further, the PMD in the light transmission path has such a characteristic that its magnitude changes with passage of time. Therefore, after an optical fiber is placed, the PMD needs to be compensated corresponding to a change of the PMD with passage of time.

To compensate the PMD corresponding to this change of the PMD with passage of time, it is necessary to detect the PMD at a high accuracy quickly. To detect the PMD at a high accuracy quickly, for example, employing Jones Matrix method, which computes the magnitude of the PMD as a result of polarization analysis on a small number of wavelengths and outputs its computation result, is effective (see Japanese Patent Application Laid-Open No. 5-273082). Additionally, the PMD may be detected as a result of polarization analysis based on Poincare sphere method or SOP method.

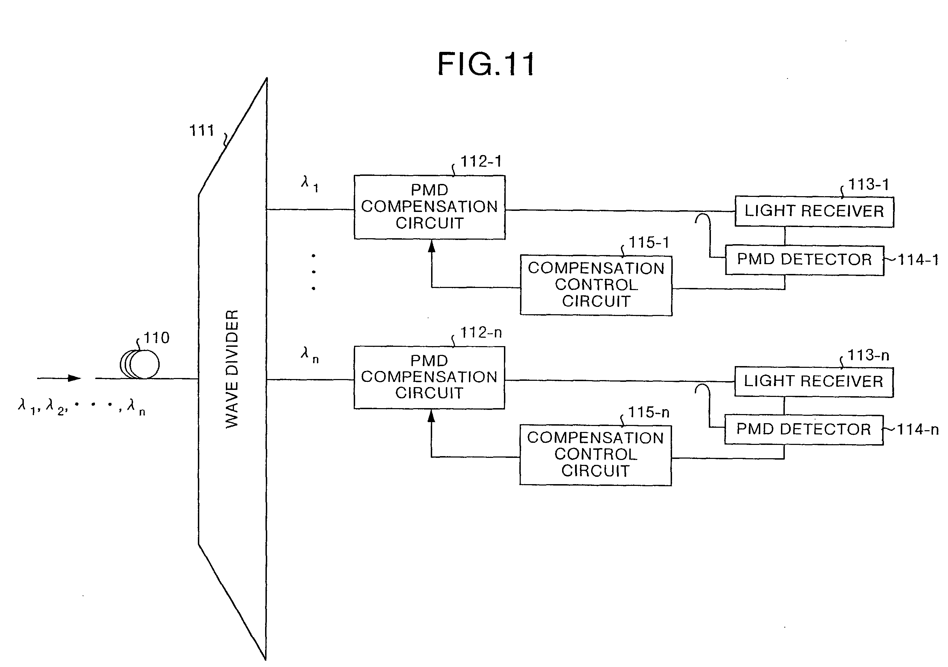

Fig. 11 is a diagram showing an outline structure of a conventional wavelength multiplexing optical transmission system which compensates the PMD for wavelength-multiplexedlightsignal. Referring to Fig. 11, light signals having a plurality of wavelengths $\lambda_1$ - $\lambda_n$ are wavelength-multiplexed and transmitted through light transmission path 110. A wave divider 111 branches wavelength-multiplexed light signal to respective wavelengths $\lambda_1$ - $\lambda_n$ (for each channel) . Respective branched light signals are inputted to the PMD compensating circuits 112-1 to 112-n corresponding to each channel and their PMDs are compensated. From light signals of respective channels whose PMD is compensated by respective PMD compensating circuits 112-1 to 112-n, a part thereof is fetched out by an optical tap just before the light signal is received by light receivers 113-1 to 113-n for each channel. Then, waveform distortion or polarization of each channel is monitored by the respective PMD detectors 114-1 to 114-n so as to detect the PMD. Compensation control circuits 115-1 to 115-n control the respective PMD compensating circuits 112-1 to 112-n based on the PMD detection results of the respective PMD detectors 114-1 to 114-n so as to minimize signal waveform distortion by the PMD of each channel.

However, because the conventional wavelength multiplexing optical transmission system detects the PMD of each channel and compensates it, the system has such a problem that an apparatus necessary for the PMD compensation is enlarged as the quantity of wavelength multiplexing is increased.

Further, according to the conventional system, because the PMD changes with passage of time, it is desired to detect and compensate the PMD quickly at a high accuracy.

## SUMMARY OF THE INVENTION

It is an object of the present invention to provide a wavelength multiplexing optical transmission system capable of compensating the PMD of wavelength-multiplexed light signal quickly at a high accuracy and realizing reduction of the size and weight thereof.

The wavelength multiplexing optical transmission system according to one aspect of the present invention comprises following units. That is, a compensating unit which compensates polarization mode dispersion of wavelength-multiplexed, transmitted light signal for each predetermined channel block; a wavelength selecting unit which selectively outputs light signal having a desired wavelength in the light signal; a polarization analyzing unit which analyzes polarization mode dispersion based on light signal having a wavelength selected by the wavelength selecting unit; and a compensation control unit which controls polarization mode dispersion for each predetermined channel block by the compensating unit based on the result of analysis in the polarization analyzing unit.

According to the above-mentioned aspect of this invention, the compensating unit compensates polarization mode dispersion of wavelength-multiplexed light signal collectively for each predetermined channel block. The wavelength selecting unit outputs selectively light signal having a desired wavelength in the light signals. The polarization analyzing unit analyzes polarization mode dispersionbasedon light signal having a wavelength selected by the wavelength selecting unit. The compensation control unit controls polarization mode dispersion for each predetermined channel block by the compensating unit based on the result of analysis in the polarization analyzing unit.

The wavelength multiplexing optical transmission system according to another aspect of the present invention comprises following units. That is, a wave divider which branches wavelength-multiplexed, transmitted light signal for each predetermined channel block; a plurality of compensating units which compensate polarization mode dispersion for each light signal branched by the wave divider; a plurality of wavelength selecting units which selectively output light signal having a desired wavelength in light signal outputted from each compensating unit; a plurality of polarization analyzing units which analyze polarization mode dispersion based on light signal having a wavelength selected by each wavelength selecting unit; and a plurality of compensation control units which control polarization mode dispersion by each compensating unit based on the result of analysis in each polarization analyzing unit.

According to the above-mentioned aspect of this invention, the wave divider branches wavelength-multiplexed, transmitted light signal for each predetermined channel block. The plurality of compensating units compensate polarization mode dispersion for each light signal branched by the wave divider. The plurality of wavelength selecting units output selectively light signal having a desired wavelength in light signals outputted from each compensating unit. The plurality of polarization analyzing units analyze polarization mode dispersion based on light signal having a wavelength selected by each wavelength selecting unit. The plurality of compensation control units controls polarization mode dispersion by each compensating unit based on the result of analysis in each polarization analyzing unit.

The wavelength multiplexing optical transmission system according to one aspect of the present invention comprises following units. That is, a wave divider which branches wavelength-multiplexed, transmitted light signal for each channel; a plurality of wave combiners which combine light signal branched by the wave divider for each predetermined channel block; a plurality of compensating units which compensate polarization mode dispersion for each light signal multiplexed by the wave combiner; a plurality of wavelength selecting units which selectively output light signal having a desired wavelength in light signal outputted from each compensating unit; a plurality of polarization analyzing units which analyze polarization mode dispersion based on light signal having a wavelength selected by each wavelength selecting unit; and a plurality of compensation control units which control polarization mode dispersion by each compensating unit based on the result of analysis in each polarization analyzing unit.

According to the above-mentioned aspect of this invention, the wave divider branches wavelength-multiplexed, transmitted light signal for each channel. The wave combiners combine light signal branched by the wave divider for each predetermined channel block. The plurality of compensating units compensate polarization mode dispersion for each light signal multiplexed by the wave combiner. The plurality of wavelength selecting units output selectively light signal having a desired wavelength in light signal outputted from each compensating unit. The plurality of polarization analyzing units analyze polarization mode dispersion based on light signal having a wavelength selected by each wavelength selecting unit. The plurality of compensation control units control polarization mode dispersion by each compensating unit based on the result of analysis in each polarization analyzing unit.

The wavelength multiplexing optical transmission system according to one aspect of the present invention comprises following units. That is, a wave divider which branches wavelength-multiplexed, transmitted light signal for each predetermined channel block; a plurality of compensating units which compensate polarization mode dispersion for each light signal branched by the wave divider; a wave combiner which combines respective light signals outputted from each compensating unit; a wavelength selecting unit which selectively outputs light signal having a desired wavelength in light signal outputted from the wave combiner; polarization analyzing unit which analyzes polarization mode dispersion based on light signal having a wavelength selected by the wavelength selecting unit; and a plurality of compensation control units which control polarization mode dispersion by each compensating unit based on the result of analysis in the polarization analyzing unit.

According to the above-mentioned aspect of this invention, the wave divider branches wavelength-multiplexed, transmitted light signal for each predetermined channel block. The plurality of compensating units compensate polarization mode dispersion for each light signal branched by the wave divider. The wave combiner combines respective light signals outputted from each compensating unit. The wavelength selecting unit outputs selectively light signal having a desired wavelength in light signals outputted from the wave combiner. The polarization analyzing unit analyzes polarization mode dispersion based on light signal having a wavelength selected by the wavelength selecting unit. The plurality of compensation control units control polarization mode dispersion by each compensating unit based on the result of analysis in the polarization analyzing unit.

Further, it is preferable that, the polarization analyzing unit analyzes polarization mode dispersion using Jones Matrix method.

Consequently, the polarization analyzing by the polarization analyzing unit is carried out according to the Jones Matrix method and the PMD amount is detected quickly at a high accuracy.

Further, it is preferable that, the polarization analyzing unit analyzes polarization mode dispersion using Poincare sphere method.

Consequently, the polarization analyzing by the polarization analyzing unit is carried out according to Poincare sphere method and the PMD amount is detected quickly at a high accuracy.

Further, it is preferable that, the polarization analyzing unit analyzes polarization mode dispersion using SOP method.

Consequently, the polarization analyzing by the polarization analyzing unit is carried out according to SOP method and the PMD amount is detected quickly at a high accuracy.

Further, it is preferable that, the system also includes a wavelength variable filter which filters light signal having a desired wavelength from inputted light signals; and sweeping control unit which sweeps the wavelength to be filtered of the light signal.

Consequently, the sweeping control unit sweeps filtered wavelength of light signal inputted to the wavelength variable filter and the wavelength variable filter outputs light signals having a wavelength component, continuously filtered to the polarization analyzing unit.

Further, it is preferable that, the wavelength selecting unit includes an optical switch which switches and outputs a desired light signal from inputted a plurality of light signals; and switching control unit which controls switching of the optical switch.

Consequently, the switching control unit selects a desired light signal from the plurality of light signals inputted to the optical switch and outputs it to the polarization analyzing unit.

Further, it is preferable that, the system also includes a light transmitter which transmits wavelength-multiplexed light signal; a light receiver which receives the wavelength-multiplexed light signal; and a light transmission path connecting the light transmitter and the light receiver, wherein at least one of the compensating unit or the plurality of compensating units are provided on the light transmission path or at a terminal end of the light transmission path.

Consequently, at least one of the compensating unit or the plurality of compensating units which compensate the PMD of light signal transmitted and wavelength-multiplexed through the light transmission path are provided on the light transmission path connecting the light transmitter and the light receiver. As a result, the PMD is compensated securely in such a polarization state in which linkage between polarization modes on the light transmission path is small and an influence of the non-linear optical effect can be neglected.

Further, it is preferable that, the wavelength selecting unit and the polarization analyzing unit are provided at a terminal end of or near the light transmission path.

Consequently, the wavelength selecting unit and the polarization analyzing unit are provided at a terminal end of or near the light transmission path in order to ensure an excellent reception characteristic by the light receiver and control the compensation of the PMD by the compensating unit provided on the light transmission path.

Other objects and features of this invention will become apparent from the following description with reference to the accompanying drawings.

BRIEF DESCRIPTION OF THE DRAWINGS

Fig. 1 is a diagram showing a structure of wavelength multiplexing optical transmission system according to a first embodiment of the present invention;
Fig. 2 is a diagram showing a modification of the wavelength multiplexing optical transmission system shown in Fig. 1;
Fig. 3 is a diagram showing a structure of a wavelength multiplexing optical transmission system according to a second embodiment of the present invention;
Fig. 4 is a diagram showing a modification of the wavelength multiplexing optical transmission system shown in Fig. 3;

Fig. 5 is a diagram showing a structure of a wavelength multiplexing optical transmission system according to a third embodiment of the present invention;

Fig. 6 is a diagram showing a modification of the wavelength multiplexing optical transmission system shown in Fig. 5;

Fig. 7 is a diagram showing a structure of a wavelength multiplexing optical transmission system according to a fourth embodiment of the present invention;

Fig. 8 is a diagram showing an entire structure of a wavelength multiplexing optical transmission system according to a fifth embodiment of the present invention;

Fig. 9 is a diagram showing an entire structure of a wavelength multiplexing optical transmission system according to a sixth embodiment of the present invention;

Fig. 10 is a diagram showing a relation between the magnitude of PMD in light transmission path inducing 1 dB penalty in optical transmission of NRZ signal and light transmission velocity; and

Fig. 11 is a diagram showing a structure of a conventional wavelength multiplexing optical transmission system.

## DESCRIPTION OF THE PREFERRED EMBODIMENTS

Preferred embodiments of the wavelength multiplexing optical transmission system of the present invention will be described in detail with reference to the accompanying drawings.

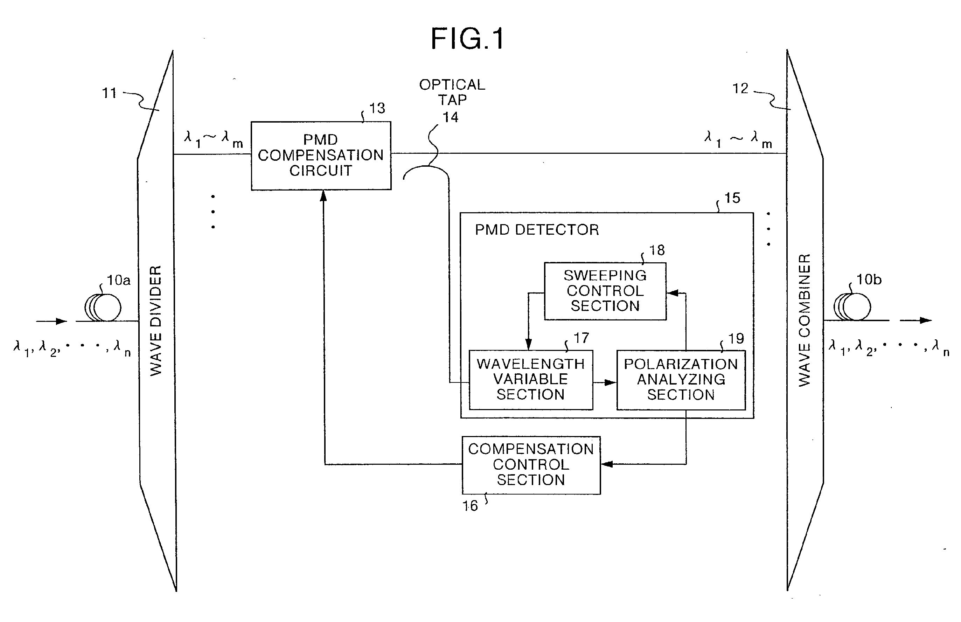

Fig. 1 is a diagram showing a structure of wavelength multiplexing optical transmission system according to the first embodiment of the present invention. In the wavelength multiplexing optical transmission system shown in Fig. 1, a wave divider 11 and a wave combiner 12 are disposed be tween light transmission paths 10a and 10b for transmitting light signal having multiple wavelengths $\lambda_1$ - $\lambda_n$ corresponding to each channel. The wave divider 11 branches light signal inputted from the light transmission path 10a for each channel block having one or more channels and outputs to a plurality of PMD compensating circuits 13 corresponding to each channel block. For example, light signal having wavelength $\lambda_1$ - $\lambda_m$ (1<m<n) is outputted to a first channel block.

Each PMD compensating circuit 13 compensates the PMD of light signal wavelength-multiplexed for each inputted channel block and outputs PMD compensated light signal to a wave combiner 12. The wave combiner 12 combines PMD-compensated light signal for each channel block and outputs wavelength-multiplexed light signal having the plurality of wavelengths

$\lambda_1$ - $\lambda_n$ onto the light transmission path lOb.

A part of light signal is fetched out of light signal outputted from each PMD compensating circuit 13 through an optical tap 14 and inputted to each wavelength variable filter 17 in each PMD detector 15. Each PMD detector 15 has a wavelength variable filter 17, a sweeping control section 18 and a polarization analyzing section 19. The sweeping control section 18 sweeps the wavelength so that the wavelength variable filter 17 makes variable a wavelength for filtering output. A light signal having a filtered wavelength by the wavelength variable filter 17 is polarization analyzed by the polarization analyzing section 19. The polarization analyzing section 19 analyzes polarization using Jones Matrix method so as to compute PMD.

According to the Jones Matrix method, stokes parameter of light having at least two different wavelength components is obtained and further, Jones Matrix is obtained from this stokes parameter. Based on this Jones Matrix value, a polarization state of the inputted light signal is determined so as to compute PMD amount.

The polarization analyzing section 19 gives an instruction for sweeping to the sweeping control section 18 in order to obtain a wavelength component necessary for the PMD computation and outputs PMD computation result to the compensation control section 16. The compensation control section 16 controls a compensation amount by the PMD compensating circuit 13 based on the inputted PMD computation result so as to minimize a signal waveform distortion by the PMD. If the compensation control section 16 controls the PMD compensation, preferably, an optimum PMD compensation is carried out by the polarization analyzing section 19 according to wavelength dependency of the PMD.

Because the PMD compensation of inputted wavelength-multiplexed light signal is carried out for each channel block, just the same numbers of the PMD compensating circuits 13, PMD detectors 15 and compensation control sections 16 as that of the channel blocks are necessary, thereby making it possible to achieve reduction of the size and weight of the entire system. Because the polarization analyzing section 19 detects PMD according to the Jones Matrix method, the PMD can be detected quickly, so that it is possible to correspond to even a PMD changing with passage of time can.

Although in the wavelength multiplexing optical transmission system shown in Fig. 1, the wave divider 11 and wave combiner 12 are disposed between the light transmission paths 10a and 10b so as to be capable of compensating for the PMD at any position on light transmission path, it is permissible to receive a PMD compensated light signal without provision of the wave combiner 12.

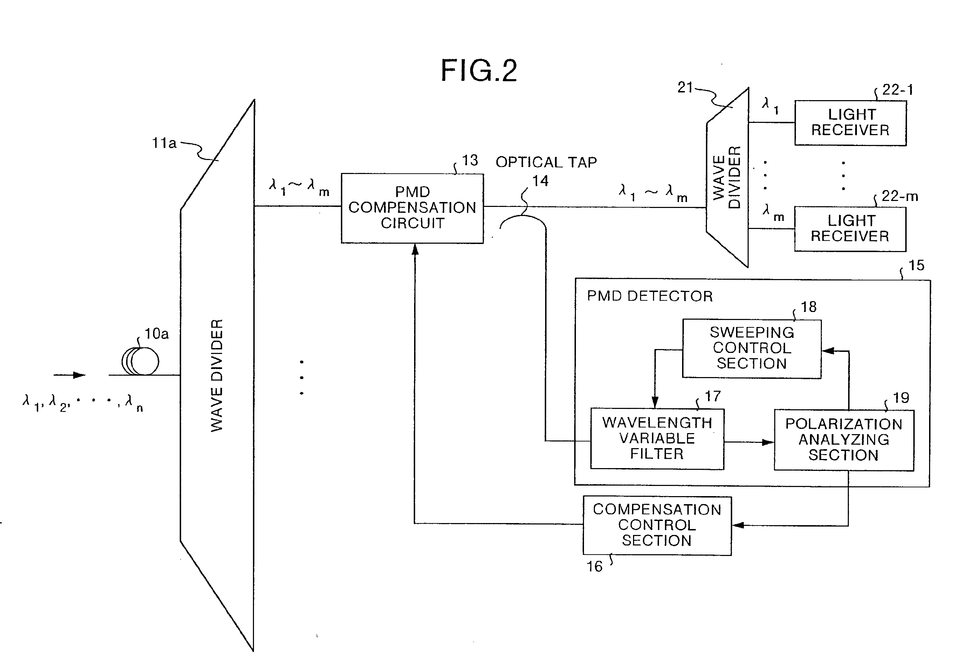

For example, Fig. 2 is a diagram showing a modification of the wavelength multiplexing optical transmission system of the first embodiment of the present invention. Referring to Fig. 2, the PMD compensated light signal by each PMD compensating circuit 13 is inputted to the wave divider 21. The wave divider 21 branches to a light signal corresponding to each channel in each channel block. Each branched light signal is connected to a receiver corresponding to each channel. For example, the first channel block (wavelength $\lambda_1$ - $\lambda_m$) is branched to m light signals. The branched light signal is inputted to light receivers 22-1 to 22-m corresponding to each channel.

Although the polarization analyzing section 19 detects the PMD using the Jones Matrix method, it is permissible to carry out polarization analysis using Poincare sphere method or state of polarization (SOP) method. According to the Poincare sphere method, a trace on the Poincare sphere is obtained when the wavelength is changed according to the stoke parameter and then, light polarization state is determined based on the wavelength dependency of this trace and the PMD amount is computed. Further, according to the SOP method, polarization state is determined based on the size and the period of the change of the degree of the polarization obtained by the stoke parameter when the wavelength is changed and the PMD amount is computed.

Because, according to the first embodiment, the PMD compensation of inputted wavelength-multiplexed light signal is carried out for each channel block collectively, just the same numbers of the PMD compensating circuits 13, PMD detectors 15 and compensation control sections 16 as that of the channel blocks are necessary, so that the reduction of the size and weight of the entire system can be achieved. Further, because the PMD is detected using polarization analytic computation based on for example, Jones Matrix method, the PMD can be detected quickly, so that it is possible to correspond to even a PMD changing with passage of time.

The second embodiment of the present invention will now be described. Although according to the first embodiment, filtering wavelength of the wavelength variable filter 17 is swept by the sweeping control section 18 so that the PMD of light signal having a filtered wavelength is detected, according to the second embodiment, light signal of each PMD compensated channel is detected and each detected light signal is switched by means of an optical switch. Then, the PMD of each switched light signal is detected.

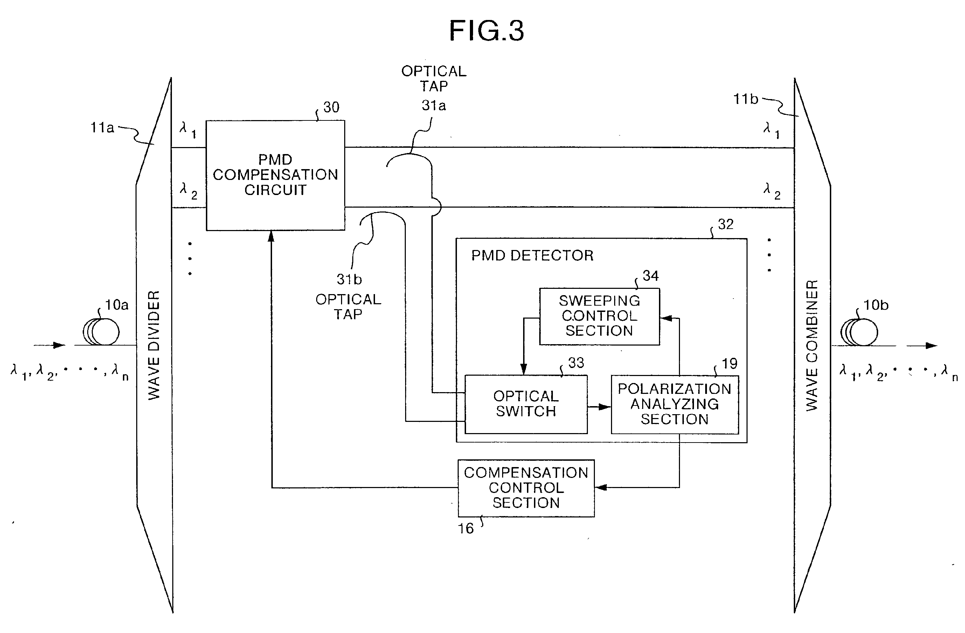

Fig. 3 is a diagram showing a structure of wavelength multiplexing optical transmission system according to the second embodiment of the present invention. In the wavelength multiplexing optical transmission system shown in Fig. 3, a wave divider lla and a wave combiner llb are disposed between light transmission paths 10a and 10b for transmitting light signal having multiple wavelengths $\lambda_1$ - $\lambda_n$ corresponding to each channel. The wave divider 11a branches and outputs light signal inputted from the light transmission path 10a for each channel block.

Each PMD compensating circuit 30 inputs light signal of one or more channels outputted from the wave divider 11a and combines respective light signals. Then, it compensates the PMD of the multiplexed light signals collectively, branches and outputs this compensated light signal to their respective original channels. For example, light signals having wavelength $\lambda_1$, $\lambda_2$ are outputted to a first PMD compensating circuit 30. The PMD compensating circuit 30 multiplexes light signals having wavelength $\lambda_1$, $\lambda_2$ and compensates the PMDs of the multiplexed light signals collectively. After that, it branches to light signals having wavelength $\lambda_1$, $\lambda_2$ and then outputs them. Meanwhile, the wave divider lla may branch for each channel block like the wave divider 11, and each PMD compensating circuit 30 may compensates the PMD of the branched light signals collectively and then branch to light signal for each channel.

A part of each channel light signal outputted from each PMD compensating circuit 30 is fetched out through optical taps 31a, 31b and inputted to each optical switch 33 in each PMD detector 32. Each PMD detector 32 has an optical switch 33, a switch control portion 34 and a polarization analyzing section 19. The optical switch 33 selectively outputs the fetched light signal to the polarization analyzing section 19 by switching of the switch control portion 34. The polarization analyzing section 19 analyzes polarization using the Jones Matrix method so as to compute the PMD. The polarization analyzing section 19 gives an instruction for switching to the switch control portion 34 in order to obtain a wavelength component necessary for the PMD computation and outputs PMD computation result to the compensation control section 16. The compensation control section 16 controls a compensation amount by the PMD compensating circuit 30 based on the inputted PMD computation result so as to minimize a signal waveform distortion by the PMD. Meanwhile, if it is necessary to sweep light signal of each channel inputted to the polarization analyzing section 19 at a short interval of wavelength, the polarization analyzing section 19 has to analyze polarization by sweeping a minute wavelength band of light signal of the inputted channel.

The PMD compensated light signal of each channel by each PMD compensating circuit 30 is outputted to the wave combiner 11b. The wave combiner 11b combines light signals of respective channels and outputs to the light transmission path 10b.

Because the PMD compensation of inputted wavelength-multiplexed light signal is carried out for each channel block, just the same numbers of the PMD compensating circuits 30, PMD detectors 32 and compensation control sections 16 as that of the channel blocks are necessary, thereby making it possible to achieve reduction of the size and weight of the entire system. Because the polarization analyzing section 19 detects PMD according to the Jones Matrix method, the PMD can be detected quickly. Further, because a quick switching can be carried out by the optical switch 33, the PMD can be detected further quickly, so that it is possible to correspond to the PMD changing with passage of time.

Although in the wavelength multiplexing optical transmission system shown in Fig. 3, the wave divider lla and the wave combiner 11b are disposed between the light transmission paths 10a and 10b so as to be capable of compensating for the PMD at any position on the light transmission path, it is permissible not to provide with the wave combiner 11b and instead receive the PMD compensated light signal.

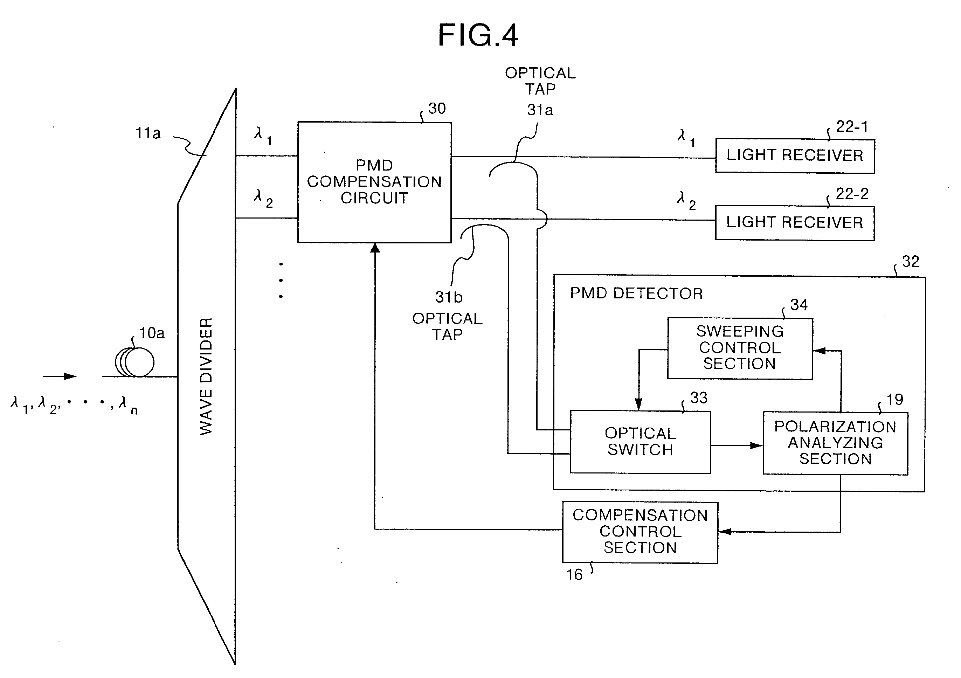

For example, Fig. 4 is a diagram showing a modification of the wavelength multiplexing optical transmission system according to the second embodiment of the present invention. In Fig. 4, light signal of each channel PMD compensated by each PMD compensating circuit 30 is inputted to light receivers 22-1 to 22-2 corresponding to each channel. Consequently, each light receiver is capable of receiving wavelength-multiplexed light signal as PMD compensated light signal of each channel.

Although the polarization analyzing section 19 detects the PMD using Jones Matrix method, the PMD detection is not restricted to this method, but it is permissible to employ polarization analysis based on Poincare sphere method or polarization analysis based on SOP method. If either Poincare sphere method or SOP method is employed, it is necessary to sweep wavelength. If the polarization analyzing section 19 needs to sweep at a finer wavelength interval, the polarization analyzing section 19 has to sweep a minute wavelength band for light signal of an inputted channel so as to analyze its polarization.

Because, according to the second embodiment, the PMD compensation of inputted wavelength-multiplexed light signal is carried out for each channel block collectively, just the same numbers of the PMD compensating circuits 30, PMD detectors 32 and compensation control sections 16 as that of the channel blocks are necessary, so that the reduction of the size and weight of the entire system can be achieved. Further, because the PMD is detected using polarization analytic computation based on for example, Jones Matrix method and a quick switching is carried out by the optical switch 33, the PMD can be detected quickly, so that it is possible to correspond to even a PMD changing with passage of time.

Next the third embodiment of the present invention will be described. Although according to the first embodiment, the PMD compensating circuit 13 compensates the PMD for light signal of each channel branched by the wave divider 11 collectively, according to the third embodiment, the PMD compensation is carried out for light signals of collected arbitrary light channels collectively.

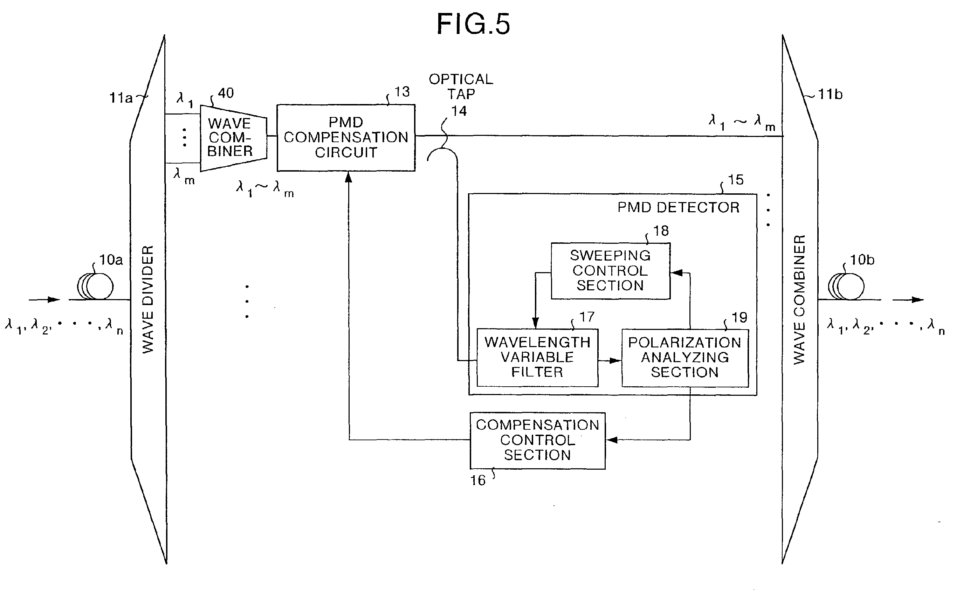

Fig. 5 is a diagram showing a structure of a wavelength multiplexing optical transmission system according to the third embodiment of the present invention. In the wavelength multiplexing optical transmission system shown in Fig. 5, a wave divider 11a and a wave combiner 11b are disposed between light transmission paths 10a and 10b for transmitting light signal having multiple wavelengths $\lambda_1$ - $\lambda_n$ corresponding to each channel. The wave divider 11a branches and outputs light signal inputted from the light transmission path 10a for each channel block.

Each wave combiner 40 combines light signals of arbitrary channels from light signals of respective channels branched by the wave divider lla and combines them. For example, the first wave combiner 40 combines light signals of channels having wavelength $\lambda_1$ - $\lambda_m$.

Each PMD compensating circuit 13 compensates the PMD of light signal outputted from the wave combiner 40 and outputs to the wave combiner llb. The wave combiner llb combines light signals inputted from each PMD compensating circuit 13 and outputs the multiplexed light signal onto the light transmission path 10b.

On the other hand, a part of light signal outputted from each PMD compensating circuit 13 is fetched through the optical tap 14 and inputted to the wavelength variable filter 17 in each PMD detector 15. Each PMD detector 15 comprises the wavelength variable filter 17, sweeping control section 18 and polarization analyzing section 19. The wavelength variable filter 17 selectively outputs light signal having a wavelength corresponding to each channel to the polarization analyzing section 19 by sweeping the wavelength by means of the sweeping control section 18. The polarization analyzing section 19 analyzes polarization using the Jones Matrix method so as to compute the PMD. The polarization analyzing section 19 gives an instruction for sweeping to the sweeping control section 18 in order to obtain light signal having wavelength component necessary for the PMD and outputs a PMD computation result to the compensation control section 16. The compensation control section 16 controls a compensation amount by the PMD compensating circuit 13 according to the inputted PMD computation result so as to minimize distortion of signal waveform by the PMD.

Consequently, the PMD compensation for inputted wavelength-multiplexed light signal is carried out in the unit of each channel block collected for each arbitrary channel, just the same numbers of the PMD compensating circuits 30, PMD detectors 32 and compensation control sections 16 as that of channel blocks corresponding to the characteristic of each channel are necessary, so that reduction of the size and weight of the entire system can be achieved. Because the polarization analyzing section 19 detects the PMD using the Jones Matrix method, a quick detection for the PMD can be carried out, so that the PMD can be detected quickly. Consequently, it is possible to correspond to a PMD changing with passage of time.

Although, in the wavelength multiplexing optical transmission system shown in Fig. 5, the wave divider lla and the wave combiner 11b are disposed between the light transmission paths 10a and 10b so as to be capable of compensating the PMD at any position on the light transmission path, it is permissible not to provide with the wave combiner llb and instead receive PMD compensated light signal.

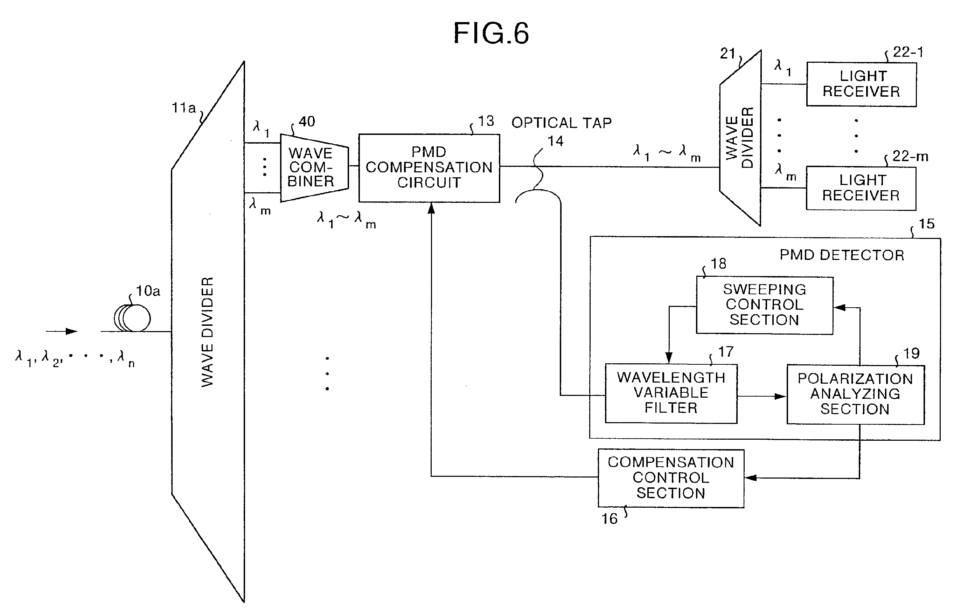

For example, Fig. 6 is a diagram showing a modification of the wavelength multiplexing optical transmission system according to the third embodiment of the present invention. In Fig. 6, light signal of each channel PMD compensated by each PMD compensating circuit 13 is inputted to the wave divider 21 corresponding to each channel block and branched to light signal of each channel. The light signals branched to light signals of respective channels are inputted to the light receivers 22-1 to 22-m corresponding to each channel. Consequently, each light receiver is capable of receiving wavelength-multiplexed light signal as PMD compensated light signal of each channel.

Although in the above described third embodiment, the PMD detector 15 employs the wavelength variable filter 17 corresponding to the first embodiment, it is permissible to analyze polarization of light signal of each channel by an optical switch corresponding to the second embodiment. In this case, the PMD compensating circuit 13 branches collectively compensated light signals to light signals of respective arbitrary channels and outputs them. Further, an optical tap corresponding to the optical tap 14 is provided for light signal of each channel and light signal of each channel fetched out by each optical tap is inputted to the optical switch. In this case, each wave divider 21 becomes unnecessary, so that light signal of each channel outputted from the PMD compensating circuit 13 is inputted to the light receivers 22-1 to 22-m as it is.

Although the polarization analyzing section 19 detects the PMD using the Jones Matrix method, instead, it is permissible to analyze polarization using Poincare sphere method or SOP method.

Because, according to the third embodiment, the PMD compensation of inputted wavelength-multiplexed light signal is carried out for each channel block collectively in which arbitrary channels are combined, just the same numbers of the PMD compensating circuits 13, PMD detectors 15 and compensation control sections 16 as that of the channel blocks are necessary, so that the reduction of the size and weight of the entire system can be achieved. Further, because the PMD is detected using polarization analytic computation based on for example, Jones Matrix method, the PMD can be detected quickly, so that it is possible to correspond to even a PMD changing with passage of time.

The fourth embodiment of the present invention will now be described. Although according to the first to third embodiments, the PMD compensating circuits 13, 30, PMD detectors 15, 32 and compensation control sections 16 corresponding to the number of each channel block are provided, according to the fourth embodiment, the PMD of light signal wavelength-multiplexed by only a PMD detector is compensated.

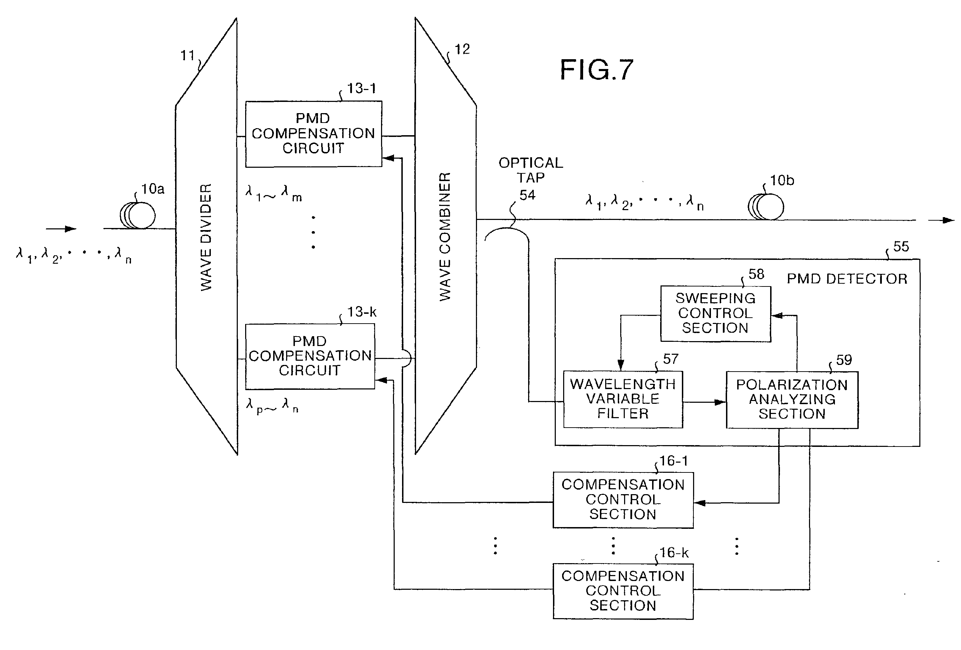

Fig. 7 is a diagram showing a structure of a wavelength multiplexing optical transmission system according to the fourth embodiment of the present invention. In the wavelength multiplexing optical transmission system shown in Fig. 7, a wave divider 11 and a wave combiner 12 are disposed between light transmission paths 10a and 10b for transmitting light signal having multiple wavelengths $\lambda_1$ - $\lambda_n$ corresponding to each channel. The wave divider 11 branches and outputs light signal inputted from the light transmission path 10a for each of one or more channel blocks.

A number of the PMD compensating circuits 13-1 to 13-k corresponding to the number of each channel block (k) are provided between the wave divider 11 and the wave combiner 12. The respective PMD compensating circuits 13-1 to 13-k compensate the PMD of light signal of each channel block outputted from the wave divider 11 collectively and outputs to the wave combiner 12. The wave combiner 12 combines light signals of respective inputted channel blocks and outputs to the light transmission path 10b.

A part of light signal outputted from the wave combiner 12 is fetched through the optical tap 54 and inputted to the wavelength variable filter 57 in each PMD detector 55. The PMD detector 55 comprises the wavelength variable filter 57, sweeping control section 58 and polarization analyzing section 59. The wavelength variable filter 57 selectively outputs light signal having a wavelength corresponding to all channels to the polarization analyzing section 59 by sweeping the wavelength by means of the sweeping control section 58. The polarization analyzing section 59 analyzes polarization using the Jones Matrix method so as to compute the PMD. The polarization analyzing section 59 gives an instruction for sweeping to the sweeping control section 58 in order to obtain light signal having wavelength component necessary for the PMD and outputs a PMD computation result to the compensation control section 16-1 to 16-k.

The compensation control sections 16-1 to 16-k are provided corresponding to the quantity of the PMD compensating circuits 13-1 to 13-k. Based on polarization analysis result inputted from the polarization analyzing section 59, the respective compensation control sections 16-1 to 16-k controls the PMD compensation for their corresponding PMD compensating circuits 13-1 to 13-k so as to minimize distortion of signal waveform caused by the PMD of each channel.

Although according to the fourth embodiment, the structure of the PMD detector 55 corresponding to the first embodiment is indicated, instead, itispermissible to employ a PMD detector using the optical switch like the second embodiment. Further, like the third embodiment, each PMD compensating circuits 13-1 to 13-k may compensate the PMD of each channel block in which arbitrary channels are combined.

Although the polarization analyzing section 59 detects the PMD using the Jones Matrix method, instead, it is permissible to analyze polarization using Poincare sphere method or SOP method.

Further, it is also permissible to provide a post stage of the wave combiner 12 with a wave divider, branch for each channel and input the branched light signal to a light receiver corresponding to each channel.

Consequently, the PMD compensation of inputted wavelength-multiplexed light signal is carried out in the unit of each channel block and by only providing with a PMD detector 55, the PMD compensation for all channels can be carried out. Therefore, reduction of the size and weight of the entire system can be accelerated. Further, because the polarization analyzing section 59 detects the PMD by analyzing polarization according to the Jones Matrix method, the PMD can be detected quickly, so that it is possible to correspond to a PMD changing with passage of time.

The fifth embodiment of the present invention will now be described. According to the fifth embodiment, a plurality of the PMD compensators having the structure shown in Figs. 1, 3, 5, 7 are disposed on the light transmission path.

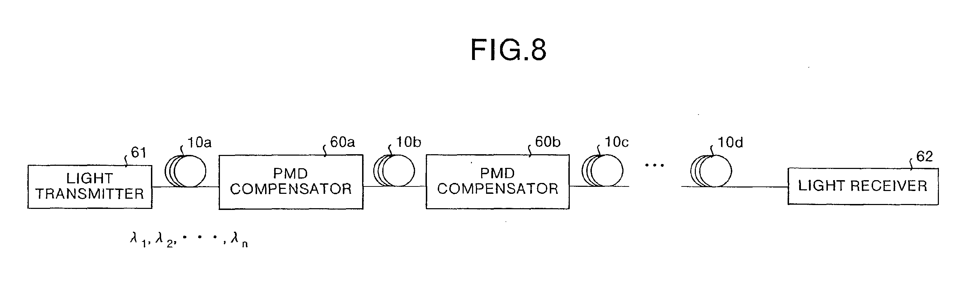

Fig. 8 is a diagram showing an entire structure of a wavelength multiplexing optical transmission system according to the fifth embodiment of the present invention. In the wavelength multiplexing optical transmission system shown in Fig. 8, a plurality of PMD compensators 60a, 60b are disposed on light transmission paths 10a to 10d connecting a light transmitter 61 with a light transmitter 62. Light signal multiplexed by the plurality of wavelengths $\lambda_1$ - $\lambda_n$ corresponding to a plurality of channels is transmitted through the light transmission paths 10a to 10d.

Each of the PMD compensators 60a, 60b comprises the wave divider 11, wave combiner 12, the plurality of PMD compensating circuits 13, a plurality of PMD detectors 15 and a plurality of compensation control sections 16 shown in Fig. 1. Therefore, the PMDs of wavelength multiplexed light signals transmitted through the light transmission paths 10a - 10d are compensated collectively in the unit of each channel block.

If a linkage between respective polarization modes on the light transmission paths 10a to 10d is small and an influence of non-linear optical effect on the light transmission paths 10a to 10d is small, an influence of waveform distortion by the PMD can be removed by carrying out the PMD compensation just in front of the light receiver 62. However, if the linkage between the polarization modes is large and the influence of non-linear optical effect cannot be neglected, if a difference of delay is generated between the polarization modes by the PMD on the light transmission paths 10a to 10d, the magnitudes of the non-linear optical effect received by the respective polarization modes differ. As a result, a linkage of power between the polarization modes is generated, so that light signal waveforms of the respective polarization modes differ. Consequently, even if the PMD compensation is carried out just in front of the light receiver 62, it is difficult to reproduce the light signal waveform.

Because, according to the fifth embodiment, the plurality of PMD compensators are disposed on the light transmission paths 10a to 10d, the linkage between the polarization modes is large or before the influence of the non-linear optical effect becomes unnegligiable, the PMD compensation can be carried out. As a result, the light signal waveform can be reproduced on the light receiver 62. Particularly this is effective if the light transmission path 10a to 10d is a long distance.

According to the fifth embodiment, the PMD compensator shown in Figs. 1, 3, 5, 7 is used as the PMD compensators 60a, 60b. Thus, the size and weight of the PMD compensator 60a, 60b can be reduced and the PMD is detected by analyzing polarization by means of the polarization analyzing section 19, 59. Thus, the PMD can be detected quickly, so that it is possible to correspond to a PMD changing with passage of time.

The sixth embodiment according to the present invention will now be described. Although according to the fifth embodiment, the plurality of independent PMD compensators 60a, 60b are disposed on the light transmission paths 10a to 10d, according to the sixth embodiment, any one of the PMD compensating circuits 13, 13-1 to 13-k, 30 shown in the first to fourth embodiment is disposed on the light transmission paths 10a to 10d in a plurality of quantity.

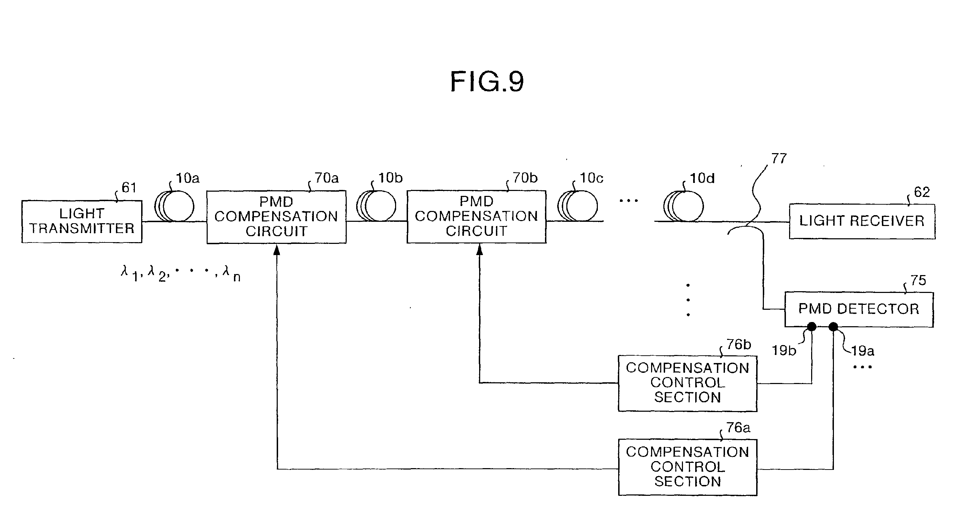

Fig. 9 is a diagram showing an entire structure of wavelength multiplexing optical transmission system according to the sixth embodiment of the present invention. In this wavelength multiplexing optical transmission system shown in Fig. 9, a plurality of PMD compensating circuits 70a, 70b are disposed on light transmission paths 10a to 10d connecting the light transmitter 61 and the light transmitter 62. As the PMD compensating circuits 70a, 70b, any one of the PMD compensating circuits 13, 13-1 to 13-k, 30 shown in Figs. 1-7 is used.

The PMD detection for controlling the PMD compensation in each PMD compensating circuit 70a, 70b is carried out by a PMD detector 75. This PMD detector 75 has the same structure as the PMD detector 55. The PMD detector 75 is disposed at an end of the light receiver 62 or near the light receiver so as to analyze polarization according to light signal fetched out by an optical tap 77 disposed on the light transmission path 10d in order to detect the PMD.

The compensation control sections 76a, 76b control the PMD compensation of the PMD compensating circuits 70a, 70b based on a PMD detecting result of the PMD detector 75. The respective compensation control sections 76a, 76b have a structure corresponding to the compensation control sections 16-1 to 16-k.

Although according to the sixth embodiment, light signals of all channels are fetched out and the PMD detector 75 for detecting the PMD based on the fetched out light signal is used, instead it is permissible to provide with a wave divider which branches light signal in the unit of each channel block and detect the PMD based on the light signal branched by this wave divider. For example, the PMD detectors 15, 32 shown in Figs. 1-6 may be used.

According to the sixth embodiment, the PMD is detected at the end of or near the light receiver 62 and based on this PMD detection result, the plurality of PMD compensating circuits disposed on the light transmission paths 10a-10d are controlled collectively. As a result, the structure of the PMD detector is simplified, thereby accelerating reduction of the size and weight of the wavelength multiplexing optical transmission system and achieving the PMD compensation which optimizes the reception characteristic of the light receiver 62. Further, because the PMD detector 75 detects the PMD by analyzing polarization based on the Jones Matrix method, the PMD can be detected quickly, so that it is possible to correspond to a PMD changing with a passage of time.

As described above, according to the one aspect of this invention, the compensating unit compensates polarization mode dispersion of wavelength-multiplexed light signal collectively for each predetermined channel block. The wavelength selecting unit outputs selectively light signal having a desired wavelength in the light signals. The polarization analyzing unit analyzes polarization mode dispersion based on light signal having a wavelength selected by the wavelength selecting unit. The compensation control unit controls polarization mode dispersion for each predetermined channel block by the compensating unit based on the result of analysis in the polarization analyzing unit. Consequently, the quantity of the compensating unit which compensates the PMD of wavelength-multiplexed, transmitted light signal becomes a predetermined number of the channel blocks, thereby accelerating reduction of the size and weight of the wavelength multiplexing optical transmission system. Further, the PMD amount is computed by the polarization analyzing unit. As a result, there is produced such an effect that quick, high-accuracy PMD compensation is achieved.

According to another aspect of this invention, the wave divider branches wavelength-multiplexed, transmitted light signal for each predetermined channel block. The plurality of compensating units compensate polarization mode dispersion for each light signal branched by the wave divider. The plurality of wavelength selecting units output selectively light signal having a desired wavelength in light signals outputted from each compensating unit. The plurality of polarization analyzing units analyze polarization mode dispersion based on light signal having a wavelength selected by each wavelength selecting unit. The plurality of compensation control units control polarization mode dispersion by each compensating unit based on the result of analysis in each polarization analyzing unit. Consequently, the quantity of the compensating unit which compensates the PMD of wavelength-multiplexed, transmitted light signal becomes a predetermined number of the channel blocks, thereby accelerating reduction of the size and weight of the wavelength multiplexing optical transmission system. Further, the PMD amount is computed by the polarization analyzing unit. As a result, there is produced such an effect that quick, high-accuracy PMD compensation is achieved.

According to the still another aspect of this invention, the wave divider branches wavelength-multiplexed, transmitted light signal for each channel. The wave combiners combine light signal branched by the wave divider for each predetermined channel block. The plurality of compensating units compensate polarization mode dispersion for each light signal multiplexed by the wave combiner. The plurality of wavelength selecting units output selectively light signal having a desired wavelength in light signal outputted from each compensating unit. The plurality of polarization analyzing units analyze polarization mode dispersion based on light signal having a wavelength selected by each wavelength selecting unit. The plurality of compensation control units control polarization mode dispersion by each compensating unit based on the result of analysis in each polarization analyzing unit. Consequently, the quantity of the compensating unit which compensates the PMD of wavelength-multiplexed, transmitted light signal becomes a predetermined number of the channel blocks, thereby accelerating reduction of the size and weight of the wavelength multiplexing optical transmission system. Further, the PMD amount is computed by the polarization analyzingunit. As a result, there is produced such an effect that quick, high-accuracy PMD compensation is achieved. Further, because the light signals are multiplexed for each predetermined channel block in which arbitrary channels are combined, using the wave combiner, the freedom of selection of respective channels composing a predetermined channel block is increased, so that flexible, effective PMD compensation can be achieved.

According to the still another aspect of this invention, the wave divider branches wavelength-multiplexed, transmitted light signal for each predetermined channel block. The plurality of compensating units compensate polarization mode dispersion for each light signal branched by the wave divider. The wave combiner combines respective light signals outputted from each compensating unit. The wavelength selecting unit outputs selectively light signal having a desired wavelength in light signals outputted from the wave combiner. The polarization analyzing unit analyzes polarization mode dispersion based on light signal having a wavelength selected by the wavelength selecting unit. The plurality of compensation control units control polarization mode dispersion by each compensating unit based on the result of analysis in the polarization analyzing unit. Consequently, the quantity of the compensating unit which compensates the PMD of wavelength-multiplexed, transmitted light signal becomes a predetermined number of the channel blocks. Further, only one wavelength selecting unit and polarization analyzing unit each have to be provided. Therefore, reduction of the size and weight of the wavelength multiplexing optical transmission system can be accelerated. Further, because the PMD amount is computed by the polarization analyzing unit, there is produced such an effect that quick, high-accuracy PMD compensation is achieved.

Further, the polarization analyzing by the polarization analyzing unit is carried out according to the Jones Matrix method and the PMD amount is detected quickly at a high accuracy. Consequently, even if the PMD changes with passage of time, the PMD can be compensated in response to this change.

Further, the polarization analyzing by the polarization analyzing unit is carried out according to Poincare sphere method and the PMD amount is detected quickly at a high accuracy. Consequently, even if the PMD changes with passage of time, the PMD can be compensated in response to this change.

Further, the polarization analyzing by the polarization analyzing unit is carried out according to SOP method and the PMD amount is detected quickly at a high accuracy. Consequently, even if the PMD changes with passage of time, the PMD can be compensated in response to this change.

Further, the sweeping control unit sweeps filtered wavelength of light signal inputted to the wavelength variable filter and the wavelength variable filter outputs light signals having a wavelength component, continuously filtered to the polarization analyzing unit. Consequently, it is possible to compute the wavelength dependency of the PMD upon entire wavelength band in a channel block whose PMD should be compensated collectively.

Further, the switching control unit selects a desired light signal from the plurality of light signals inputted to the optical switch and outputs it to the polarization analyzing unit. Consequently, it is possible to compute the PMD of each channel wavelength band in a channel block whose PMD should be compensated collectively.

Further, at least one of the compensating unit or the plurality of compensating units which compensate the PMD of light signal transmitted and wavelength-multiplexed through the light transmission path are provided on the light transmission path connecting the light transmitter and the light receiver. As a result, the PMD is compensated securely in such a polarization state in which linkage between polarization modes on the light transmission path is small and an influence of the non-linear optical effect can be neglected. Thus, there is such an effect that the light receiver is capable of reproducing light signal waveform securely.

Further, the wavelength selecting unit and the polarization analyzing unit are provided at a terminal end of or near the light transmission path in order to ensure an excellent reception characteristic by the light receiver and control the compensation of the PMD by the compensating unit provided on the light transmission path. Thus, not only reduction of the size and weight of the wavelength multiplexing optical transmission system can be accelerated further, but also the light receiver is capable of reproducing light signal waveform securely.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A wavelength multiplexing optical transmission system comprising:

   a compensating unit (13, 30) which compensates polarization mode dispersion of wavelength-multiplexed and transmitted light signal for each predetermined channel block;
   a wavelength selecting unit (15, 33) which selectively outputs light signal having a desired wavelength in the light signal;
   a polarization analyzing unit (19) which analyzes polarization mode dispersion based on light signal having a wavelength selected by said wavelength selecting unit (15, 33); and
   a compensation control unit (16) which controls polarization mode dispersion for each predetermined channel block by said compensating unit (13, 30) based on the result of analysis in said polarization analyzing unit (19).

2. A wavelength multiplexing optical transmission system comprising:

   a wave divider (11) which branches wavelength-multiplexed and transmitted light signal for each predetermined channel block;
   a plurality of compensating units (13) which compensate polarization mode dispersion for each light signal branched by said wave divider;
   a plurality of wavelength selecting units (15) which selectively output light signal having a desired wavelength in light signal outputted from each compensating unit (11) ;
   a plurality of polarization analyzing units (19) which analyze polarization mode dispersion based on light signal having a wavelength selected by each wavelength selecting unit (15); and
   a plurality of compensation control units (16) which control polarization mode dispersion by each compensating unit (13) based on the result of analysis in each polarization analyzing unit (19).

3. A wavelength multiplexing optical transmission system comprising:

a wave divider (11a) which branches wavelength-multiplexed and transmitted light signal for each channel;
a plurality of wave combiners (40) which combine light signal branched by said wave divider (11a) for each predetermined channel block;
a plurality of compensating units (13) which compensate polarization mode dispersion for each light signal multiplexed by said wave combiner;
a plurality of wavelength selecting units (15) which selectively output light signal having a desired wavelength in light signal outputted from each compensating unit (13) ;
a plurality of polarization analyzing units (19) which analyze polarization mode dispersion based on light signal having a wavelength selected by each wavelength selecting unit (15); and
a plurality of compensation control units (16) which control polarization mode dispersion by each compensating unit (13) based on the result of analysis in each polarization analyzing unit (19).

4. Awavelength multiplexing optical transmission system comprising:

a wave divider (11) which branches wavelength-multiplexed and transmitted light signal for each predetermined channel block;
a plurality of compensating units (13-1 to 13-k) which compensate polarization mode dispersion for each light signal branched by said wave divider (11);
a wave combiner (12) which combines respective light signals outputted from each compensating unit (13-1 to 13-k) ;
a wavelength selecting unit (55) which selectively outputs light signal having a desired wavelength in light signal outputted from said wave combiner (12);
a polarization analyzing unit (59) which analyzes polarization mode dispersion based on light signal having a wavelength selected by said wavelength selecting unit (55); and
a plurality of compensation control units (16-1 to 16-k) which control polarization mode dispersion by each compensating unit (13-1 to 13-k) based on the result of analysis in said polarization analyzing unit (59).

5. A wavelength multiplexing optical transmission system according to any one of claim 1 to 4 wherein said polarization analyzing unit (19, 59) analyzes polarization mode dispersion using Jones Matrix method.

6. Awavelength multiplexing optical transmission system according to any one of claim 1 to 4 wherein said polarization analyzing unit (19, 59) analyzes polarization mode dispersion using Poincare sphere method.

7. Awavelength multiplexing optical transmission system according to any one of claim 1 to 4 wherein said polarization analyzing unit (19, 59) analyzes polarization mode dispersion using SOP method.

8. Awavelength multiplexing optical transmission system according to any one of claim 1 to 7 wherein said wavelength selecting unit (15, 55) comprising:

a wavelength variable filter (17, 57) which filters light signal having a desired wavelength from inputted light signals; and
a sweeping control unit (18, 58) which sweeps the wavelength to be filtered of the light signal.

9. A wavelength multiplexing optical transmission system according to any one of claim 1 to 7 wherein said wavelength selecting unit (32) comprising:

an optical switch (33) which switches and outputs a desired light signal from inputted a plurality of light signals; and
switching control unit (34) which controls switching of said optical switch (33).

10. A wavelength multiplexing optical transmission system according to any one of claim 1 to 9 further comprising:

a light transmitter (61) which transmits wavelength-multiplexed light signal;
a light receiver (62) which receives the wavelength-multiplexed light signal; and
a light transmission path connecting said light transmitter and said light receiver, wherein
at least one of said compensating unit (13, 30) or said plurality of compensating units (13-1 to 13-k) are provided on said light transmission path or at a terminal end of said light transmission path.

11. A wavelength multiplexing optical transmission system according to claim 10 wherein said wavelength selecting unit (15, 55, 32) and said polarization analyzing unit (19, 59) are provided at a terminal end of or near said light transmission path.

# FIG.1

WAVE COMBINER

WAVE DIVIDER

PMD COMPENSATION CIRCUIT

13

OPTICAL TAP 14

PMD DETECTOR

15

SWEEPING CONTROL SECTION

18

WAVELENGTH VARIABLE SECTION

17

POLARIZATION ANALYZING SECTION

19

COMPENSATION CONTROL SECTION

16

12

11

10b

10a

$\lambda_1, \lambda_2, \cdots, \lambda_n$

$\lambda_1 \sim \lambda_m$

$\lambda_1 \sim \lambda_m$

$\lambda_1, \lambda_2, \cdots, \lambda_n$

# FIG.2

EP 1 130 827 A2

# FIG.3

EP 1 130 827 A2

OPTICAL TAP 31a

11b

$\lambda_1$

11a

$\lambda_1$

30

PMD COMPENSATION CIRCUIT

$\lambda_2$

$\lambda_2$

32

PMD DETECTOR

31b

OPTICAL TAP

34

SWEEPING CONTROL SECTION

33

OPTICAL SWITCH

19

POLARIZATION ANALYZING SECTION

WAVE DIVIDER

WAVE COMBINER

10a

$\lambda_1, \lambda_2, \cdots, \lambda_n$

10b

$\lambda_1, \lambda_2, \cdots, \lambda_n$

COMPENSATION CONTROL SECTION

16

# FIG.4

OPTICAL TAP
31a

PMD COMPENSATION CIRCUIT 30

11a $\lambda_1$

$\lambda_2$

$\lambda_1$ LIGHT RECEIVER 22-1

$\lambda_2$ LIGHT RECEIVER 22-2

10a

$\lambda_1, \lambda_2, \cdots, \lambda_n$

WAVE DIVIDER

31b
OPTICAL TAP

PMD DETECTOR 32

SWEEPING CONTROL SECTION 34

OPTICAL SWITCH 33

POLARIZATION ANALYZING SECTION 19

COMPENSATION CONTROL SECTION 16

17

EP 1 130 827 A2

# FIG.5

WAVE DIVIDER

$\lambda_1, \lambda_2, \cdots, \lambda_n$

10a

11a

$\lambda_1$
$\vdots$
$\lambda_m$

40
WAVE COM-BINER

$\lambda_1 \sim \lambda_m$

13
PMD COMPENSATION CIRCUIT

OPTICAL TAP
14

$\lambda_1 \sim \lambda_m$

11b

WAVE COMBINER

10b

$\lambda_1, \lambda_2, \cdots, \lambda_n$

15
PMD DETECTOR

18
SWEEPING CONTROL SECTION

17
WAVELENGTH VARIABLE FILTER

19
POLARIZATION ANALYZING SECTION

16
COMPENSATION CONTROL SECTION

FIG.6

FIG.7

EP 1 130 827 A2

# FIG.8

LIGHT TRANSMITTER  /61

$\lambda_1, \lambda_2, \cdot \cdot \cdot, \lambda_n$

/10a

PMD COMPENSATOR  /60a

/10b

PMD COMPENSATOR  /60b

/10c

. . .

/10d

LIGHT RECEIVER  /62

# FIG.9

LIGHT
TRANSMITTER 61

10a

PMD
COMPENSATION
CIRCUIT 70a

10b

PMD
COMPENSATION
CIRCUIT 70b

10c

10d

77

LIGHT RECEIVER 62

$\lambda_1, \lambda_2, \cdots, \lambda_n$

PMD DETECTOR 75

19b   19a

COMPENSATION
CONTROL
SECTION 76b

COMPENSATION
CONTROL
SECTION 76a

EP 1 130 827 A2

# FIG.10

# FIG.11

EP 1 130 827 A2